# EUROPÄISCHE PATENTSCHRIFT

(11) **EP 1 071 894 B1**
(45) Veröffentlichungstag und Bekanntmachung des Hinweises auf die Patenterteilung: **17.07.2002**
(21) Anmeldenummer: 99922107.0
(22) Anmeldetag: 19.04.1999
(51) Int. Cl.: F16H 61/36, B60K 20/02

(54) **SCHALTHEBELEINHEIT**
GEARSHIFT LEVER UNIT
UNITE LEVIER DE COMMANDE

(30) Priorität: 17.04.1998 DE 19817166
(43) Veröffentlichungstag der Anmeldung: 31.01.2001
(73) Patentinhaber: Fico Triad, 08191 Rubi (ES)
(72) Erfinder: GRAUS, Xavier Motger, E-08011 Barcelona (ES)
(74) Vertreter: Hess, Peter K., Dipl.-Phys.
(86) Internationale Anmeldenummer: EP9902631
(87) Internationale Veröffentlichungsnummer: WO9954648

(56) Entgegenhaltungen:
- EP-A- 0 431 307
- EP-A- 0 864 780
- US-A- 5 560 253
- PATENT ABSTRACTS OF JAPAN vol. 095, no. 008, 29. September 1995 (1995-09-29) & JP 07 139621 A (TSUDA KOGYO KK), 30. Mai 1995 (1995-05-30)

## Beschreibung

### 1. Technisches Gebiet:

Die vorliegende Erfindung betrifft eine Schalthebeleinheit, insbesondere für ein Kraftfahrzeug, zur Übertragung von Bewegungen eines Schalthebels auf Seilzüge, insbesondere zur Steuerung eines Fahrzeuggetriebes.

### 2. Der Stand der Technik:

In einem Fahrzeug werden zum Wechseln der Gänge typischerweise die Kippbewegungen eines Schalthebels über Seilzüge (sogenannte "Push-Pull-Kabel") oder ein Gestänge an das Getriebe des Fahrzeugs übertragen. Der Schalthebel ist dabei zumeist um zwei zueinander senkrecht stehende Achsen drehbar gelagert, um eine unabhängige Kippbewegung in zwei zueinander senkrecht stehenden Ebenen zu ermöglichen.

Bei herkömmlichen Schalthebeleinheiten werden die Seilzüge oder das Gestänge häufig direkt an der jeweiligen Achse der Schalthebellagerung befestigt, so daß eine Drehung um die Achse in eine Drehung des übertragenden Seils oder des Gestänges umgesetzt wird, das seinerseits die Drehbewegung an das Getriebe weiterleitet. Dabei ergeben sich jedoch die folgenden Schwierigkeiten:

Seilzüge, die an sich aufgrund ihrer einfachen Montage und des geringen Gewichts viele Vorteile für die Verwendung in einem Fahrzeug aufweisen, sind in erster Linie fur die Übertragung von Zugbewegungen geeignet. Die präzise Ubertragung von Dreh- oder Torsionsbewegungen hingegen, wie sie bei Schalthebeleinheiten nach dem Stand der Technik zur Steuerung des Getriebes notwendig sind, stellt höchste Anforderungen an die Steifigkeit und Ermüdungsfestigkeit des verwendeten Drahtseils. Andererseits beeinträchtigt eine zu große Steifigkeit die Flexibilität bei der Verlegung des Seilzugs im Fahrzeug.

Ein Gestänge vermeidet zwar die obengenannten Probleme, erfordert jedoch wesentlich größeren Aufwand und damit erheblich höhere Kosten, da die einzelnen Bestandteile wie Stangen, Gelenke oder Lager zusätzlich zwischen der Schalthebeleinheit und dem Getriebe montiert und im Fall einer Reparatur demontiert werden müssen.

Eine Schalthebeleinheit gemäß dem Oberbegriff des Anspruchs 1 ist zum Beispiel aus der JP-A-7 139 621 bekannt. Diese Schalthebeleinheit setzt die Kippbewegungen des Schalthebels in lineare Bewegungen um, um hinreichend flexible Seilzüge zur präzisen Steuerung des Getriebes verwenden zu können.

Der vorliegenden Erfindung liegt das Problem zugrunde, eine einfache, verbesserte und preiswert herzustellende Schalthebeleinheit zu schaffen.

### 3. Zusammenfassung der Erfindung:

Die Erfindung betrifft eine Schalthebeleinheit gemäß Anspruch 1.

Bevorzugt umfaßt der Schalthebel einen Vorsprung und das Umlenkelement eine Öffnung, in die der Vorsprung eingreift, um das Umlenkelement zu drehen. Die Öffnung ist dabei vorzugsweise rechteckig ausgebildet und der Vorsprung greift in der Öffnung des Umlenkelements an einem gleitbar gelagerten Schlitten an, der bei Drehung des Umlenkelements zur Kompensation in der Öffnung hin und her gleiten kann.

Bevorzugt ist der erste Seilzug an einem gleitbar gelagerten Schlitten in einer rechteckigen Vertiefung der Rahmeneinheit befestigt, wobei der Schlitten zur Kompensation der Auf- und Abbewegung der Vertiefung beim Kippen des Schalthebels um die erste Achse aufwärts und abwärts gleiten kann.

Vorzugsweise ist auch der zweite Seilzug an einem gleitbar gelagerten Schlitten in einer rechteckigen Vertiefung des Umlenkelements befestigt, wobei der Schlitten zur Kompensation der Auf- und Abbewegung der Vertiefung aufwärts und abwärts gleiten kann.

### 4. Kurze Beschreibung der Zeichnung

In der folgenden detaillierten Beschreibung wird eine derzeit bevorzugte Ausführungsform der vorliegenden Erfindung unter Bezugnahme auf die Zeichnung beschrieben, in der zeigt:
- Fig. 1:: eine Darstellung der gesamten Schalthebeleinheit.
- Fig. 2:: eine Detaildarstellung der Befestigung der beiden Seilzüge
- Fig. 3:: eine Detaildarstellung des Vorsprungs am Schalthebel
- Fig. 4:: eine Detaildarstellung des Umlenkelements
- Fig. 5:: eine Detaildarstellung der Justiereinrichtung der Seilzüge und der Befestigung der Hüllen am Gehäuse

### 5. Detaillierte Beschreibung der Erfindung

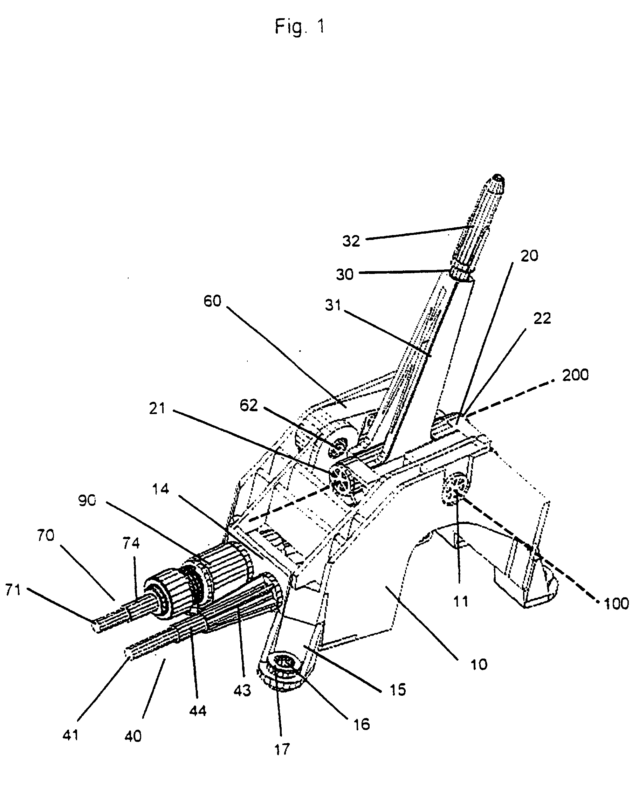

Unter Bezugnahme auf Fig. 1 umfaßt die erfindungsgemäße Schalthebeleinheit eine Gehäuseeinheit 10, die in Sandwichbauweise mit mehreren Querseiten- und Längsseitenwänden aufgebaut ist, um eine hohe Stabilität zu erreichen. An einer Längsseite der Gehäuseeinheit 10 ist über einen Drehzapfen 11 eine Rahmeneinheit 20 drehbar gelagert. Die Richtung des Drehzapfens 11 senkrecht zu den Längsseitenwänden der Gehäuseeinheit 10 definiert eine erste Rotationsachse 100. Um die Schalthebeleinheit am Fahrzeug zu befestigen, sind am Gehäuse 10 Standfüße 15 mit Öffnungen 16 vorgesehen, in denen zur Erhöhung der Stabilität Ösen 17 vorgesehen sind.

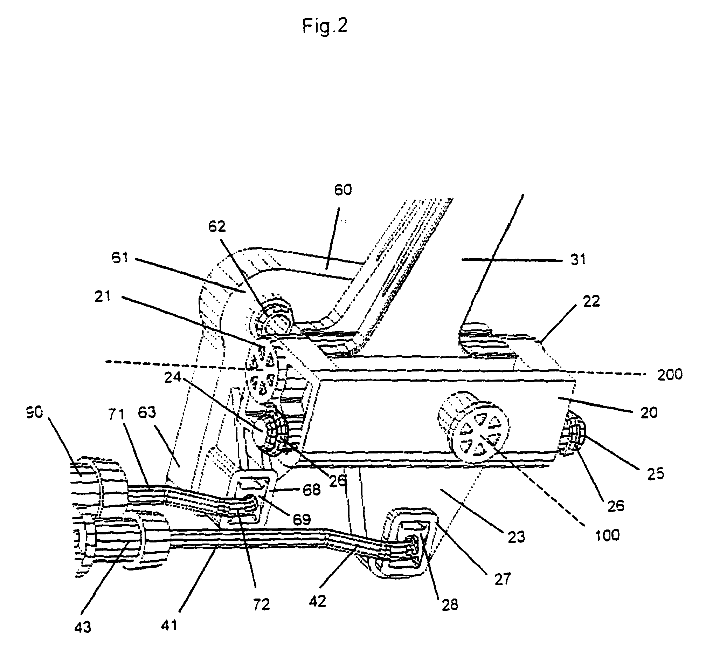

In der Rahmeneinheit ist über zwei Drehzapfen 21, 22, ein Schalthebel 30 drehbar gelagert. Die zwei Drehzapfen 21, 22 definieren dadurch eine zweite Rotationsachse 200, die senkrecht zur ersten Rotationsachse 100 orientiert ist. An der Unterseite der Rahmeneinheit ist, wie weiter unten unter Bezugnahme auf Fig. 2 genauer beschrieben wird, das innere Drahtseil 41 des ersten Seilzugs 40 befestigt.

Der Schalthebel 30 besteht aus einem unteren Teil 31 und einem oberen Griffteil 32, das in eingebauten Zustand aus einer Manschette (nicht dargestellt), die die Schalthebeleinheit abdeckt, hervorragt. Vorzugsweise ist der Schalthebel 30 in seiner Normalposition aufrecht orientiert und die Rahmeneinheit 20 somit waagerecht ausgerichtet. Um den ergonomischen Anforderungen an einen Schalthebel gerecht zu werden, ist der Schalthebel 30 dabei bevorzugt leicht nach vorne geneigt.

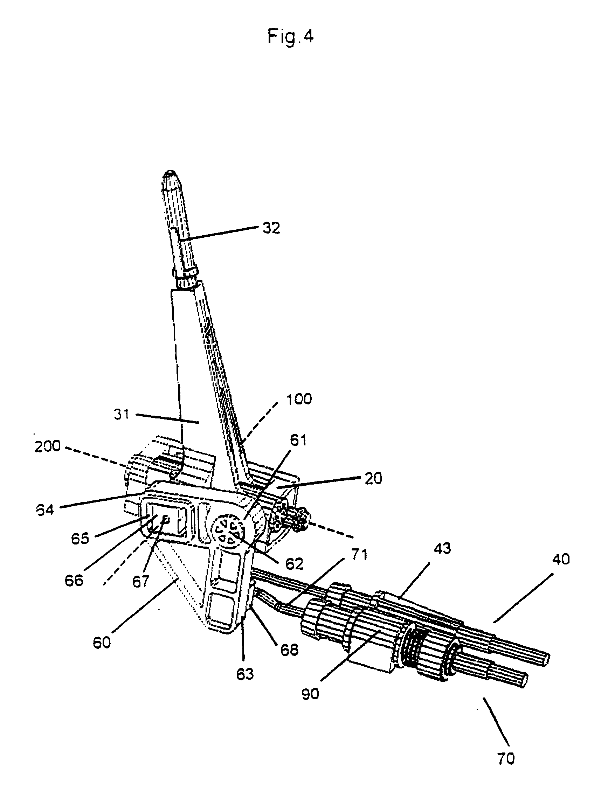

Auf der dem Drehzapfen 11 gegenüberliegenden Längsseite der Gehäuseeinheit 10 ist zwischen zwei parallelen Außenwänden der über einen weiteren Drehzapfen 62 das Umlenkelement 60 drehbar gelagert, an dem das innere Drahtseil 71 des zweiten Seilzug 70 befestigt ist. Der Drehzapfen 62 ist damit parallel zur ersten Achse 100, jedoch seitlich von ihr versetzt angeordnet. Die Funktionsweise und genaue Ausbildung des Umlenkelements wird weiter unten unter Bezugnahme auf Fig. 4 genauer erläutert.

Am rückwärtigen Ende der Gehäuseeinheit 10 sind an der äußersten Querseitenwand 14 die Hüllen 44, 74 der Seilzüge 40, 70 befestigt. Beispielhaft ist in Fig. 1 für den zweiten Seilzug 70 eine Justiereinrichtung 90 zur Einstellung der Spannung des zweiten Seilzugs 70 gezeigt, während die Hülle 44 des ersten Seilzugs 40 über ein einfaches Anschlußteil 43 mit der Querseitenwand 14 verbunden ist. Die inneren Drahtseile 41, 71 sind dabei so ausgerichtet, daß die gedachte Fortsetzung des jeweiligen Drahtseils genau auf den Aufhängepunkt an der Rahmeneinheit 20 bzw. am Umlenkelement 60 zeigt. Der Aufbau der Justiereinrichtung 90 und des Anschlußteils 43 wird weiter unten unter Bezugnahme auf Fig. 4 genauer erläutert.

Entsprechend der in Fig. 2 gezeigten bevorzugten Ausführungsform sind im unteren Bereich der Rahmeneinheit 20 schräg unterhalb der Drehzapfen 21, 22 zylindrische Vorsprünge 24, 25 angebracht, an denen jeweils ein Gummiring 26 befestigt ist. Diese Vorsprünge dienen als Anschläge an den Querseiten der Gehäuseeinheit 10 zur Begrenzung der Drehbewegung der Rahmeneinheit 20 im Gehäuse und damit der Kippbewegung des Schalthebels 30 um die erste Rotationsachse 100. Die Gummiringe 26 dämpfen den Anschlag.

Wie in Fig. 2 weiter dargestellt umfaßt die Rahmeneinheit 20 ferner eine Verlängerung 23, die als eine im wesentliche dreieckige Strebe ausgebildet ist. Gemäß einer anderen (nicht dargestellten) Ausführungsform ist diese Verlängerung 23 halbrund ausgebildet, um bei hohen Zugbelastungen des Seilzug 40 eine stabilere Verbindung zum oberen Teil der Rahmeneinheit 20 zu ermöglichen.

Bei einer Kippbewegung des Schalthebels 30 und damit der Rahmeneinheit 20 um die erste Rotationsachse 100, bewegt sich die Befestigung des inneren Drahtseils 41 des ersten Seilzugs 40 im wesentlichen, d.h. proportional zum Sinus des Kippwinkels, vor und zurück. Dadurch wird die gewünschte, erfindungsgemäße Zugbewegung auf das erste innere Drahtseil 41 übertragen. Gleichzeitig bewegt sich die Befestigung aber auch geringfügig, d.h. proportional zum Kosinus des Kippwinkels, aufwärts und abwärts und damit senkrecht zur Richtung des ersten Seilzugs 40.

Damit keine Verspannungen des Seilzugs 40 auftreten, ist das innere Drahtseil 41 des ersten Seilzugs in einer rechteckigen Vertiefung 27 der Verlängerung 23 der Rahmeneinheit 20 an einem gleitbar gelagerten Schlitten 28 befestigt, der bei der Drehbewegung der Rahmeneinheit 20 um die erste Rotationsachse 100 zur Kompensation aufwarts und abwärts gleiten kann. Das Ende des inneren Drahtseils 41 ist dabei zu einem Haken 42 geformt, der in eine kleine Öffnung des Schlittens 28 eingesteckt wird.

Bei einer Drehung des Umlenkelements 60 um den Drehzapfen 62 (vergl. Fig. 4) bewegt sich analog die Befestigung des inneren Drahtseils 71 des zweiten Seilzugs 70 im wesentlichen, d.h. proportional zum Sinus des Drehwinkels des Umlenkelements 60, vor und zurück. Dadurch wird die gewünschte, erfindungsgemäße Zugbewegung auf das zweite innere Drahtseil 71 übertragen. Gleichzeitig bewegt sich die Befestigung aber auch geringfügig, d.h. proportional zum Kosinus des Drehwinkels des Umlenkelements 60 aufwärts und abwärts und damit senkrecht zur Richtung des zweiten Seilzugs 70.

Damit auch keine Verspannungen des zweiten Seilzugs 70 auftreten, ist das innere Drahtseil 71 des zweiten Seilzugs in einer rechteckigen Vertiefung 68 des Umlenkelements 60 an einem gleitbar gelagerten Schlitten 69 befestigt, der bei der Drehbewegung der Umlenkeinheit 60 zur Kompensation aufwärts und abwärts gleiten kann. Das Ende des inneren Drahtseils 71 ist dabei zu einem Haken 72 geformt, der in eine kleine Öffnung des Schlittens 69 eingesteckt wird.

Nach einer zweiten, einfacheren Ausführungsform (nicht dargestellt) der Kompensationsmechanismen in der Befestigung der inneren Drahtseile 41, 71 ist sowohl in der Verlängerung 23 der Rahmeneinheit 20 als auch am Umlenkelements jeweils ein senkrechtes Langloch vorgesehen, in der der Haken 42, 72 des jeweiligen Seilzuges aufwärts und abwärts gleiten kann.

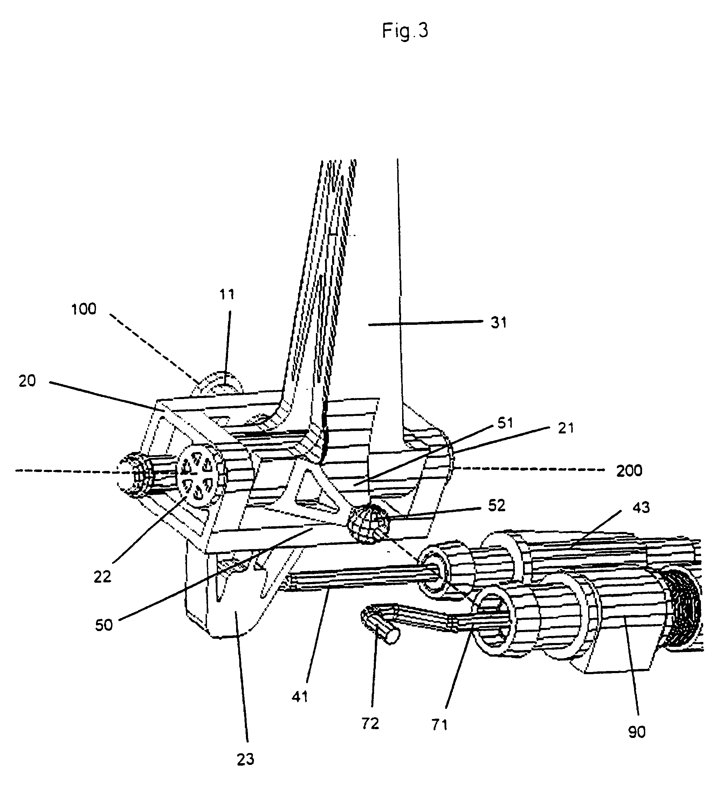

Unter Bezugnahme auf Fig. 3 weist der Schalthebel 30 auf der Seite, die dem Drehzapfen 11 abgewandt ist, in Richtung der ersten Rotationsachse 100 einen Vorsprung 50 auf, der bevorzugt aus einem pyramidenförmig sich verjüngenden Bereich 51 und einem kugelförmigen Ende 52 besteht. Wird der Schalthebel 30 um die zweite Rotationsachse 200 verkippt, so bewegt sich das kugelförmige Ende 52 dieses Vorsprungs 50 bei kleinen Winkelauslenkungen im wesentlichen aufwärts bzw. abwärts. Das kugelförmige Ende 52 greift dabei in das Umlenkelement 60 ein, das die Aufgabe hat, die Auf- und Abbewegung des kugelförmigen Endes 52 in eine Vor- und Zurückbewegung parallel zu Richtung der Seilzüge 40, 70 zu übertragen. Dazu ist, wie in Fig. 4 zu erkennen, das Umlenkelement 60 bevorzugt dreieckig ausgebildet. In einer Ecke 61 ist das Umlenkelement 60 über den Drehzapfen 62 an der Gehäuseeinheit 10 drehbar gelagert. In einer zweiten, in Normalposition nach unten vorstehenden Ecke 63 ist das innere Drahtseil 71 des zweiten Seilzugs 70 befestigt. In einer dritten Ecke 64 umfaßt das Umlenkelement 60 eine Öffnung 65, in die der Vorsprung 50 eingreift, um das Umlenkelement 60 zu drehen.

Eine Drehung des Umlenkelements 60 um den Drehzapfen 62 führt dazu, daß sich die Öffnung 65 auf einer Kreisbahn um den Drehzapfen 62 bewegt. Dadurch wird sie aus der Ebene herausgedreht, in der sich der Vorsprung 50 des Schalthebels 30 bei einer Kippbewegung um die zweite Rotationsachse 200 bewegt. Zur Kompensation ist die Öffnung 65 rechteckig ausgebildet. Nach der in Fig. 4 gezeigten bevorzugten Ausführung greift der Vorsprung 50 in der rechteckigen Öffnung 65 des Umlenkelements 60 an einem gleitbar gelagerten Schlitten 66 an, der in der Öffnung 65 hin- und hergleiten kann und dadurch bei einer Drehung des Umlenkelements 60 in der Bewegungsebene des Vorsprungs 50 des Schalthebels 30 verbleiben kann. Damit der Vorsprung 50 das Umlenkelement 60 drehen kann, weist der Schlitten 66 in der Mitte eine kleine runde Öffnung 67 auf, in die das kugelförmige Ende 52 des Vorsprungs 50 eingreift.

In einer zweiten, einfacheren Ausführungsform (nicht dargestellt) der vorliegenden Erfindung besteht der Vorsprung 50 am Schalthebel 30 aus einem runden Stab, dessen Ende in einem einfachen, in der Ausgangsposition waagrechten Langloch des Umlenkelements gleitet. Auch in dieser Ausführungsform kompensiert die längliche Form der Öffnung die Drehung aus der Bewegungsebene des Vorsprungs 50.

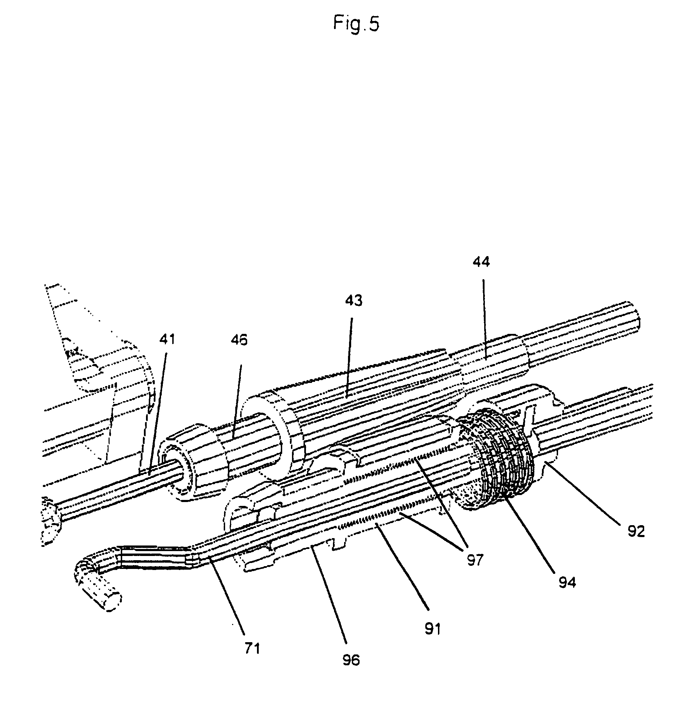

Fig. 5 zeigt eine Detaildarstellung der Justiereinrichtung 90 und des Anschlußteils 43. Die Justiereinrichtung besteht aus zwei Hüllenteilen 91, 92. die ineinander geschoben werden, um die Länge der Hülle 72 und damit die Spannung auf dem inneren Drahtseil 71 zu verändern. Um ein unbeabsichtigtes Verschieben der beiden Hüllenteile 91, 92 gegeneinander zu verhindern, sind über einen Teil des Umfangs der beiden Hüllenteile 91, 92 Verzahnungen 97 auf den beiden Hüllenteilen vorgesehen, die ineinander einrasten. Soll die Justierung geändert werden, werden die beiden Hüllenteile gegeneinander um 90° verdreht, um die Verzahnungen voneinander zu lösen, so daß die Hüllenteile 91, 92 relativ zueinander verschoben werden können. Zur Kompensation der Zugbelastung auf dem Seilzug während der Justage ist zwischen den beiden Hüllenteilen eine Spiralfeder 94 vorgesehen.

Das Hüllenteil 91, mit dem der Seilzug 70 an der hinteren Querseite der Gehäuseeinheit 10 befestigt wird, verfügt über einen Bereich 96 mit einem geringeren Durchmesser, der zur Befestigung in eine Öffnung entsprechenden Durchmessers in der hinteren Querseite 14 der Gehäuseeinheit eingeführt ist.

Wird auf eine Justiereinrichtung 90 verzichtet, bildet ein Hüllenteil 43 mit einem Bereich eines geringeren Durchmessers 46, der dem Bereich 96 in seiner Funktion entspricht, die Befestigung der Hülle 44 des Seilzuges an der Gehäuseeinheit 10.

Zur preisgünstigen Herstellung der Schalthebeleinheit werden die beschriebenen Bauteile der Schalthebeleinheit vorzugsweise im Spritzgußverfahren aus Kunststoff, insbesondere aus Polyamid, hergestellt. Lediglich die Ösen 17 zur Verstärkung der Befestigung der Schalthebeleinheit am Rahmen des Fahrzeug sind bevorzugt aus Metall gefertigt.

## Patentansprüche

1. Schalthebeleinheit zur Übertragung von Kippbewegungen eines Schalthebels (30) in Zugbewegungen von zwei Seilzügen (40, 70), mit
a) einer Gehäuseeinheit (10), *die eine erste Rotationsachse (100) definiert;*
b) einer Einheit (20), die um die erste Rotationsachse (100) drehbar an der Gehäuseeinheit (10) gelagert ist und *die eine zweite, zur ersten Rotationsachse (100) senkrechte Rotationsachse (200) definiert*, wobei an der Einheit (20) der erste (40) der zwei Seilzüge (40, 70) befestigt ist;
c) einer Umlenkeinheit (60), die zu der ersten Rotationsachse (100) parallel, jedoch von dieser versetzt an der Gehäuseeinheit (10) drehbar gelagert ist, an der der zweite (70) der zwei Seilzüge (40, 70) befestigt ist;
d) einem Schalthebel (30), *der* um die zweite Rotationsachse (200) drehbar in der genannten Einheit (20) gelagert ist, und der derart mit der Umlenkeinheit (60) operativ verbunden ist, daß
e) ein Verkippen des Schalthebels (30) um die erste Rotationsachse (100) im wesentlichen zu einer Zugbewegung auf den ersten Seilzug (40) führt und ein Verkippen des Schalthebels (30) um die zweite Rotationsachse (200) zu einer Drehung der Umlenkeinheit (60) und somit im wesentlichen zu einer Zugbewegung auf den zweiten Seilzug (70) führt,
**dadurch gekennzeichnet, daß**
f) die Einheit (20) eine Rahmeneinheit ist mit zwei gegenüberliegenden lagern (21, 22), die die zweite Rotationsachse (100) definieren, und daß
g) der Schalthebel (30) im Schnittpunkt der beiden Rotationsachsen (100, 200) gelagert ist.

2. Schalthebeleinheit nach Anspruch 1, wobei der Schalthebel (30) einen Vorsprung (50) und das Umlenkelement (60) eine Öffnung (65) umfaßt, in die der Vorsprung (50) eingreift, um das Umlenkelement (60) zu drehen.

3. Schalthebeleinheit nach Anspruch 2, wobei die Öffnung (65) rechteckig ausgebildet ist und der Vorsprung (50) in der Öffnung (65) des Umlenkelements an einem gleitbar gelagerten Schlitten (66) angreift, der bei Drehung des Umlenkelements (60) zur Kompensation in der Öffnung hin und her gleiten kann.

4. Schalthebeleinheit nach Anspruch 3, wobei der Vorsprung aus einem sich verjüngenden Bereich (51) besteht, der in einem kugelförmigen Bereich (52) endet.

5. Schalthebeleinheit nach Anspruch 4, wobei der Schlitten (66) in der rechteckigen Öffnung (65) des Umlenkelements (60) in der Mitte eine kleine runde Öffnung (67) aufweist, in die der kugelförmige Bereich (52) des Vorsprungs (50) eingreift.

6. Schalthebeleinheit nach einem der Ansprüche 1 bis 5, wobei das Umlenkelement (60) im wesentlichen dreieckig ausgebildet ist und an seiner ersten Ecke (61) drehbar an der Gehäuseeinheit befestigt ist, an seiner zweiten Ecke (63) der zweite Seilzug (70) befestigt ist und an seiner dritter Ecke (64) der Vorsprung (50) des Schalthebels (30) angreift.

7. Schalthebeleinheit nach einem der Ansprüche 1 bis 6, wobei der erste Seilzug (40) ein inneres Drahtseil (41) aufweist, das an einem gleitbar gelagerten Schlitten (28) in einer rechteckigen Vertiefung (27) der Rahmeneinheit (20) befestigt ist und wobei der Schlitten (28) zur Kompensation der Auf- und Abbewegung der Vertiefung (27) beim Kippen des Schalthebels (30) um die erste Rotationsachse (100) aufwärts und abwärts gleiten kann.

8. Schalthebeleinheit nach einem der Ansprüche 6 oder 7, wobei der zweite Seilzug 70 ein inneres Drahtseil (71) aufweist, das an einem gleitbar gelagerten Schlitten (69) in einer rechteckigen Vertiefung (68) der zweiten Ecke (63) des Umlenkelements (60) befestigt ist und wobei der Schlitten (69) zur Kompensation der Auf- und Abbewegung der Vertiefung (68) aufwärts und abwärts gleiten kann.

9. Schalthebeleinheit nach einem der vorhergehenden Ansprüche, wobei an der Gehäuseeinheit (10) Standfüße (15) mit Löchern (16) vorgesehen sind, um die Schalthebeleinheit am Fahrzeugrahmen zu befestigen.

10. Schalthebeleinheit nach Anspruch 9, wobei in den Löchern (16) der Standfüße (15) metallische Ösen (17) vorgesehen sind, um die Stabilität der Befestigung am Fahrzeugrahmen zu erhöhen.

11. Schalthebeleinheit nach einem der vorhergehenden Ansprüche, wobei am Ende zumindest eines der Seilzüge (40, 70) eine Justiereinrichtung (90, 91) angebracht ist, um die Spannung zumindest eines Seilzugs zu justieren.

12. Schalthebeleinheit nach einem der vorhergehenden Ansprüche, wobei der Schalthebel (30) und die zweite Rotationsachse (200) einen Winkel < 90° einschließen.

13. Schalthebeleinheit nach einem der vorhergehenden Ansprüche, wobei an der Rahmeneinheit (20) Vorsprünge (24, 25) als Anschläge angebracht sind, die die Drehbewegung der Rahmeneinheit begrenzen.

## Claims

1. Shift-lever unit for converting tilting movements of a shift lever (30) into pulling movements of two cables (40, 70) comprising:
a. a housing (10) defining a first rotation axis (100);
b. a unit (20) being arranged at the housing (10) so as to be rotatable about the first rotation axis (100) and defining a second rotation axis (200) which is orthogonal to the first rotation axis (100), wherein the first (40) of the two cables (40, 70) is fastened to the unit (20);
c. a linking unit (60) which is parallel to the first rotation axis (100) but with a distance arranged at the housing (10) so as to be rotatable, to which the second (70) of the two cables (40, 70) is fastened;
d. a shift-lever (30) being arranged in said unit (20) so as to be rotatable about the second rotation axis (200) and which is operatively coupled to the linking unit (60) so that
e. a tilting of the shift-lever (30) about the first rotation axis (100) essentially leads to a pulling movement on the first cable (40) and the tilting of the shift lever (30) about the second rotation axis (200) to a rotation of the linking unit (60) and thereby essentially to a pulling movement of the second cable (70), **characterized in that**
f. the unit (20) is a frame unit with two opposite bearings (21, 22) defining the second rotation axis (200), and that
g. the shift-lever (30) is arranged at the intersection of the two rotation axis (100, 200).

2. Shift-lever unit according to claim 1, wherein the shift lever (30) comprises a projection (50) and the linking unit (60) comprises an opening (65) in which the projection (50) engages in order to rotate the linking unit (60).

3. Shift-lever unit according to claim 2, wherein the opening (65) is of rectangular design and wherein the projection (50) engages a slidably arranged slide (66) in the opening (65) of the linking unit, which can slide in a reciprocating manner in the opening for compensation during rotation of the linking unit (60).

4. Shift-lever unit according to claim 3, wherein the projection consists of a narrowing region (51) terminating in a spherically shaped region (52).

5. Shift-lever unit according to claim 4, wherein the slide (66) comprises in the rectangular opening (65) of the linking unit (60) a small round opening (67) in the centre, in which opening (67) the spherically shaped region (52) of the projection (50) engages.

6. Shift-lever unit according to one of the claims 1 to 5, wherein the linking unit (60) is essentially triangular and arranged at its first corner (61) at the housing so as to be rotatable, wherein the second cable (70) is fastened to its second comer (63) and wherein the projection (50) of the shift-lever (30) engages at its third comer (64).

7. Shift-lever unit according to one of the claims 1 to 6, wherein the first cable (40) comprises an inner wire cable (41) which is fastened to a slidably arranged slide in a rectangular recess (27) of the frame unit (20) and wherein the slide (28) is able to slide up and down for compensating the upward and downward movement of the recess (27) during tilting of the shift lever (30) about the first rotation axis (100).

8. Shift-lever unit according to one of the claims 6 or 7, wherein the second cable (70) comprises an inner wire cable (71) fastened to a slidably arranged slide (69) in a rectangular recess (68) of the second corner of the linking unit (60) and wherein the slide (69) can slide up and down tatsächlich for compensating the upward and downward movement of the recess (68).

9. Shift-lever unit according to one of the preceding claims, wherein feet (15) with holes are arranged at the housing unit (10) to mount the shift-lever unit to the frame of a vehicle.

10. Shift-lever unit according to claim 9, wherein metallic eyelets (17) are provided in the holes (16) of the feet (15) to increase the stability of the mounting to the vehicle frame.

11. Shift-lever unit according to one of the preceding claims, wherein an adjusting device (19, 91) is arranged at the end of at least one of the cables (40, 70) to adjust the tension of at least one cable.

12. Shift-lever unit according to one of the preceding claims, wherein the shift lever (30) and the second rotation axis (200) enclose an angle of less than 90°,

13. Shift-lever unit according to one of the preceding claims, wherein projections (24, 25) are attached as stops at the frame unit (20) limiting the rotary movement of the frame unit.

## Revendications

1. Unité à levier de commutation pour transmettre des mouvements de basculement d'un levier de commutation (30) lors de mouvements de traction de deux câbles de traction (40, 70), comportant
a) une unité formant boîtier (10), qui définit un premier axe de rotation (100);
b) une unité (20) qui est montée sur l'unité formant boîtier (10) de manière à pouvoir tourner autour du premier axe de rotation (100) et qui définit un second axe de rotation (200) perpendiculaire au premier axe de rotation (100), le premier (40) des deux câbles de traction (40, 70) étant fixé à l'unité (20);
c) une unité de déviation (60), qui est montée parallèlement au premier axe de rotation (100) mais de manière à pouvoir tourner en étant décalé de ce dernier sur l'unité formant boîtier (10), à laquelle est fixé le second (70) des deux câbles de traction (40, 70),
d) un levier de commutation (30), qui est monté de manière à pouvoir tourner autour du second axe de rotation (200) dans ladite unité (20) et qui est relié de façon opérationnelle à l'unité de déviation (60) de telle sorte que
e) un basculement du levier de commutation (30) autour du premier axe de rotation (100) conduit essentiellement à un déplacement de traction appliqué au premier câble de traction (40), et un basculement du levier de commutation (30) autour du second axe de rotation (200) conduit à une rotation de l'unité de déviation (60) et par conséquent essentiellement à un déplacement de traction appliqué au second câble de traction (70),
**caractérisée en ce que**
f) l'unité (20) est une unité en forme de cadre comportant deux paliers opposés (21, 22), qui définissent le second axe de rotation (100), et que
g) le levier de commutation (30) est tourillonné au niveau du point d'intersection des deux axes de rotation (100, 200).

2. Unité à levier de commutation selon la revendication 1, dans laquelle le levier de commutation (30) possède une partie saillante (50) et l'élément de déviation (60) comporte une ouverture (65), dans laquelle l'appendice saillante (65) s'engage pour faire tourner l'élément de déviation (60).

3. Unité à levier de commutation selon la revendication 2, dans laquelle l'ouverture (65) est agencée avec une forme rectangulaire et la partie saillante (50) s'engage dans l'ouverture (65) de l'élément de déviation, sur un chariot monté coulissant (66), qui lors de la rotation de l'élément de déviation (60), peut glisser en va-et-vient par l'ouverture pour réaliser une compensation.

4. Unité à levier de commutation selon la revendication 3, dans laquelle la partie saillante est constitué par une partie de forme rétrécie (51), qui se termine par une partie de forme sphérique (52).

5. Unité à levier de commutation selon la revendication 4, dans laquelle le chariot (66) possède au centre, dans l'ouverture rectangulaire (65) de l'élément de déviation (60) une petite ouverture circulaire (67), dans laquelle s'engage la partie de forme sphérique (59) de la partie saillante (50).

6. Unité à levier de commutation selon l'une des revendications 1 à 5, dans laquelle l'élément de commutation (60) est agencé essentiellement avec une forme triangulaire et est fixé au niveau de son premier coin (61) de manière à pouvoir tourner sur l'unité formant boîtier, est fixé au niveau de son second coin (63) au second câble de traction (70) et est accroché, au niveau de son troisième coin (64), à la partie saillante (50) du levier de commutation (30).

7. Unité à levier de commutation selon l'une des revendications 1 à 6, dans laquelle le premier câble de traction (40) comporte un fil intérieur (41), qui est fixé sur un chariot monté coulissant (28), dans un renfoncement rectangulaire (27) de l'unité en forme de cadre (20), et dans laquelle le chariot (28) servant à compenser le soulèvement et l'abaissement du renfoncement (27) lors du basculement du levier de commutation (30) autour du premier axe de rotation (100), peut glisser dans le sens montant et dans le sens descendant.

8. Unité à levier de commutation selon l'une des revendications 6 ou 7, dans laquelle le second câble de traction (70) possède un fil intérieur (71), qui est fixé à un chariot monté coulissant (69), dans un renfoncement rectangulaire (68) du second coin (63) de l'élément de déviation (60) et dans laquelle le chariot (69) peut coulisser dans le sens montant et dans le sens descendant pour compenser le déplacement ascendant et le déplacement descendant du renfoncement (68).

9. Unité à levier de commutation selon l'une des revendications précédentes, dans laquelle sur l'unité formant boîtier (10) sont prévus des pieds d'appui (15) pourvus de trous (16), pour fixer l'unité à levier de commutation sur le châssis du véhicule.

10. Unité à levier de commutation selon la revendication 9, dans laquelle dans les trous (16) des pieds d'appui (15) sont prévus des oeillets métalliques (17) servant à accroître la stabilité de la fixation sur le châssis du véhicule.

11. Unité à levier de commutation selon l'une des revendications précédentes, dans laquelle à l'extrémité d'au moins l'un des câbles de traction (40, 70) est monté un dispositif d'ajustement (90, 91) servant à ajuster la tension d'au moins un câble de traction.

12. Unité à levier de commutation selon l'une des revendications précédentes, dans laquelle le levier de commutation (30) et le second axe de rotation (200) font un angle < 90°.

13. Unité à levier de commutation selon l'une des revendications précédentes, dans laquelle sur une unité formant cadre (20) sont montés des appendices saillantes (24, 25) en tant que butée, qui limitent le mouvement de rotation de l'unité formant cadre.
